# EUROPEAN PATENT APPLICATION

(11) **EP 4 604 587 A1**
(43) Date of publication of application: **20.08.2025**
(21) Application number: 24382156.8
(22) Date of filing: 16.02.2024
(51) Int. Cl.: H04W 4/06, H04L 67/52, H04W 4/021, H04W 36/00

(54) **A METHOD OF INITIATING APPLICATION CONTEXT RELOCATION IN A TELECOMMUNICATIONS NETWORK, A NETWORK ENTITY AND A COMPUTER PROGRAM**

(71) Applicant: Vodafone Group Services Limited, Newbury RG14 2FN (GB)
(72) Inventor: DAWES, Peter, United Kingdom, London W2 6BY (GB); GONZALEZ, Veronica, London W2 6BY United Kingdom (ES); SABATER, Susana Maria, London W2 6BY United Kingdom (ES)
(74) Representative: Boult Wade Tennant LLP

(57) **Abstract**

A method of initiating application context relocation in a telecommunications network is provided. The method comprises receiving a request from a user equipment, UE, for an application client running on the UE to connect to an application server selected from one or more registered application servers. The method further comprises determining a selected application server from the one or more registered application servers. The method further comprises determining a service area of the selected application server. The method further comprises sending a request to monitor a location of the UE. The method further comprises determining that the UE has left the service area. The method further comprises initiating application context relocation in response to determining that the UE has left the service area.

## Description

### Field of the invention

The present disclosure relates to application context relocation in a telecommunications network. More specifically, the disclosure relates to application context relocation triggered by a change in a location of a user equipment, UE, where an application client running on the UE is connected to an application server in the telecommunications network.

### Glossary

RAN - Radio Access Network
UPF - User Plane Function
SMF - Session Management Function
PDU - Packet Data Unit
URSP - UE Route Selection Policy
AS - Application Server
GPS - Global Positioning System
ID - Identifier
API - Application Programming Interface
TS - Technical Specification
AC - Application Client
ACID - Application Client Identification
ACR - Application Context Relocation
ACT - Application Context Transfer
AF - Application Function
ASP - Application Service Provider
DN - Data Network
DNAI - Data Network Access Identifier
DNN - Data Network Name
EAS - Edge Application Server
EASID - Edge Application Server Identification
ECS - Edge Configuration Server
ECSP - Edge Computing Service Provider
EDN - Edge Data Network
EEC - Edge Enabler Client
EECID - Edge Enabler Client Identification
EEL - Edge Enabler layer
EES - Edge Enabler Server
EESID - Edge Enabler Server Identification
FQDN - Fully Qualified Domain Name
GPSI - Generic Public Subscription Identifier
LADN - Local Area Data Network
NEF - Network Exposure Function
OP - Operator Platform
OPG - Operator Platform Group
S-EAS - Source Edge Application Server
S-EES - Source Edge Enabler Server
SCEF - Service Capability Exposure Function
SSID - Service Set Identifier
T-EAS - Target Edge Application Server
T-EES - Target Edge Enabler Server
TAI - Tracking Area Identity
UE - User Equipment
NB - Node B (Radio Base Station Receiver)
gNB - Next-Generation Node B
TE - Terminal Equipment
MS - Mobile Station
MT - Mobile Terminal
UT - User Terminal
SS - Subscriber Station
PDA - Personal Digital Assistant
CDMA - Code Division Multiple Access
FDMA - Frequency Division Multiple Access
TDMA - Time Division Multiple Access
OFDMA - Orthogonal Frequency Division Multiple Access
SC-FDMA - Single Carrier Frequency Division Multiple Access
MC-FDMA - Multicarrier Frequency Division Multiple Access
UTRA - Universal Terrestrial Radio Access
GSM - Global System for Mobile Communications (2G)
GSMA - GSM Association
GPRS - General Packet Radio Service
EDGE - Enhanced Data Rates for GSM Evolution
IEEE - Institute of Electrical and Electronics Engineers
E-UTRA - Evolved UTRA
UMTS - Universal Mobile Telecommunications System (3G)
E-UMTS - Evolved UMTS
3GPP - 3rd Generation Partnership Project
DL - Downlink
UL - Uplink
LTE - Long Term Evolution (4G)
LTE-A - LTE-Advanced
NR - New Radio (5G)
FDD - Frequency Division Duplex
TDD - Time Division Duplex
FPGA - Field-Programmable-Gate-Array
ASIC - Application-Specific-Integrated-Circuit
DSP - Digital-Signal-Processor
CD-ROM - Compact Disc Read-Only Memory
DVD-ROM - Digital Versatile Disc Read-Only Memory
ROM - Read-Only Memory
RAM - Random-Access Memory
EPROM - Erasable Programmable Read-Only Memory
EEPROM - Electrically Erasable Programmable Read-Only Memory

### Background

Edge computing techniques aim to reduce the distances data is required to travel across the network and thereby reduce data latency. 3GPP standards specify a number of procedures to keep latency to a minimum within the network.

Telecommunications networks include various features and procedures to manage user plane routing (also called "data plane routing") in order to improve network performance. For example, to reduce latency in the network. The present application aims to enhance existing network functionality. The enhancements are described with reference to a 3GPP 5G network. However, the invention is not limited to 5G networks and may be applicable to future iterations of network standards.

In a network, the data plane is separate from the control plane. The control plane is responsible for determining how data is managed, routed, and processed. The data plane is responsible for the actual movement of the data. Application data passes from the radio access network (RAN) to a "user plane function" (UPF) in the core network. The control plane of the core network is managed separately by the session management function (SMF).

A user equipment, UE, (also referred to as a "user terminal", UT) can set up multiple data sessions (which are referred to a "packet data unit" sessions, PDU sessions) and each PDU session can be independently routed, including via different UPFs. Alternatively, a single PDU session can be configured to route data to different endpoints in the core network and/or edge data network on a per-application basis.

A UE can route data from applications that it hosts into different PDU sessions on a per-application basis using "UE route selection policy" (URSP) rules.

In one example, the number of hops that data is required to make between the UE and the application server may be reduced to two by travelling from the UE to the AS via a single UPF.

The above features can be used to select a data plane route from an application on the UE to a UPF and then on to an application server in the core network and/or edge data network. The route may be selected to reduce the latency. Reducing the latency consists of two parts, which are explained below.

In a first part, the network (e.g., the SMF in the core network) should select the appropriate UPF through which data is routed. In the low latency example, this might preferably be the UPF that provides the lowest number of hops from UE to the application server.

In a second part, the selected application server should preferably be the one that gives the shortest route (in terms of time taken) from the selected UPF.

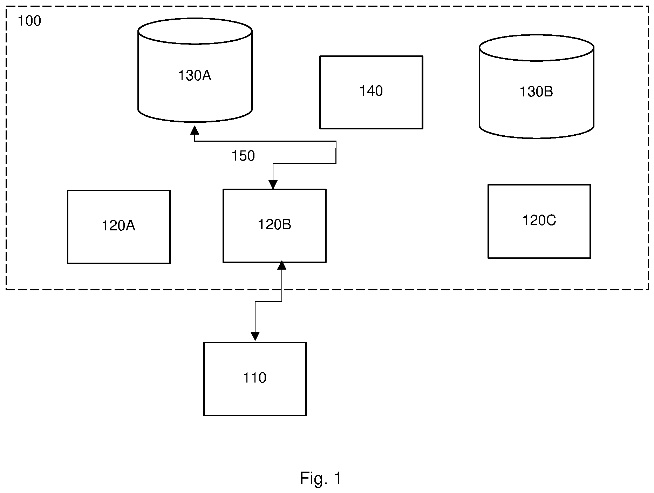

Fig. 1 illustrates selection of a shortest route 150 from UE-hosted application 110 to an application server 130A in a telecommunications network 100 (operator network). Data is routed via a UPF 120B selected from one or more UPFs 120A, 120B and 120C by a session management function SMF 140. The application server 130A is selected from one or more registered application servers 130A and 130B to reduce the distance between the client application funning on the UE 110 and the selected application server 130A.

Existing standardized cellular network procedures describe methods for a UE to interact with the network when it detects that it has moved away from the area served by its current application server. The standardized procedures allow the UE to query the network to discover a new application server, to connect to this new application server, and for the network to select a new UPF and update its routing of the data path. Similar procedures exist for the application server, which can monitor the location of the UE.

The process of connecting to a new application server may be caused by a trigger event. One example of a trigger event is the UE leaving a service area of the current application server. When the UE requests an application server, the network allocates an application server for the UE to connect to and also provides a service area of the application server. When the UE moves out of the service area, a trigger event is created to initiate the process of connecting to a new application server.

Currently, the procedure of location monitoring is performed by the UE directly or by the application server. However, due to their roles in the network, neither the UE nor the application server is aware by default of the network structure. Therefore, when performing the location monitoring role and determining whether to initiate application context relocation, the UE or application server might request new network routing information even though its movement is covered by the same base station (gNodeB). In the case of an unchanged gNodeB, re-routing the application client connection to a different application server might result in a longer data path, which is the opposite of the desired result.

The process of unnecessarily or incorrectly requesting network routing information is inefficient and may result in poor battery performance of the UE. Avoiding this inefficiency requires the network routing information (e.g. cell IDs connected to a particular gNodeB or UPF) to be provided to the UE and/or application server, which could be a security issue if the network routing information is sensitive. Moreover, the routing information stored at the UE or application server could become out of date if it is not updated frequently. Use of out-of-date routing information could cause an incorrect application server to be selected, which could result in inefficient data routing and/or poor application client performance.

The network routing information may be different for each application and for each operator network. Therefore, the volume of routing information stored at the UE or application server may be large.

The UE tracks its location in terms of a geographical location, such as GPS coordinates. Data routing is likely to depend on network location, rather than geographical location. Therefore, the UE and/or application server may need to translate the location between a geographical location and a network location in order to perform the application context relocation function.

### Summary

Existing standardized procedures for routing data to reduce latency rely on the UE or application server initiating application context relocation in response to trigger events. No existing standardized cellular network procedure provides a method by which the network itself monitors the location of the UE (e.g., at a network entity in the core network or edge data network) and manages re-selection of UPF and application server as a UE moves. The network is not currently able to independently detect when the UE moves and provide the initial trigger for application context relocation.

A network entity called the "edge enabler server" or "EES" has been standardized as a repository for application server information and as a central point for application server relocation requests (and related UPF relocation requests). However, current procedures do not allow the EES to manage relocation completely independently of the UE and application server.

Existing standardized procedures also rely on the UE or the application server to be given detailed routing information, which is specific to the core network. Giving routing information to a UE or application server is problematic because such information might be commercially sensitive and might change, causing a configuration maintenance burden and possible re-configuration errors. Moreover, the routing information will be different for every network that the UE connects to (in particular, it will be different for every network operator) and will also differ per-application. An application that depends on all UEs connecting to a single server will have a different routing profile from an application that requires each individual UE to connect to its closest server.

As mentioned above, existing procedures rely on the UE or application server monitoring UE location. However, the application service provider is likely to monitor the geographical location of the UE. For example, a mobile phone might track its location in geographical terms (e.g., using GPS coordinates) and not in terms of the cell identities of the mobile network. The mobile network operator, however, will design the network routing in terms of cell locations and the UPFs connected to those cell locations. A network entity within the operator network (e.g., within the core network or edge data network) may therefore be better placed to perform the application context relocation role.

In one example, suburbs A and B of a city are covered by a single base station (gNodeB). When the UE moves geographically from suburb A to suburb B, application context relocation may be triggered because the decision is based on geographical location, rather than network location (serving gNodeB). The application context is relocated but the (unchanged) gNodeB may be further from the new application server than the old one, so data path will be longer not shorter. By using a network location, rather than a geographic location, some examples of the proposed methods prevent such scenarios and therefore improve efficiency of data routing and application performance, as well as reducing instances of context relocation where not required.

Changes of UPF and changes of application server are not necessarily linked, the UPF might change with no related change of application server. In order to correctly control the data path, an application (running in the UE or application server) must have network knowledge of which UPF connects to which application server. One example is a set of application servers running on satellites. Connecting to the correct application server is a combination of both time (because satellites move) and cell location, and would be complex for a mobile handset to track and manage.

Existing applications that do not control which application server they connect to could benefit from a network that optimizes their connected application server. Some legacy applications, which are not server-location aware, could be given improved performance by the network, with no change to the application itself.

The EES is listed as a detection entity in the existing standards. However, the EES cannot detect trigger events to initiate application context relocation. The EES may pass data including location data from the UE to the AS (and is therefore already in data path). However, it is not currently possible to configure the EES to subscribe to UE location updates (e.g., by sending UE location event requests to the 5G core).

Whilst application servers may be located within the operator network (e.g., within the core network or within an edge data network), they are not typically aware of the network routing information. Moreover, application servers may be located in an external data network. Likewise, UEs are not typically aware of the network routing information and connect to the operator network via an access network. The present invention therefore proposes a method by which a network entity within the operator network (such as the EES) can monitor the UE's location and trigger application context relocation.

A method of initiating application context relocation in a telecommunications network is provided. The method comprises receiving a request from a user equipment, UE, for an application client running on the UE to connect to an application server selected from one or more registered application servers. The method further comprises determining a selected application server from the one or more registered application servers. The method further comprises determining a service area of the selected application server. The method further comprises sending a request to monitor a location of the UE. The method further comprises determining that the UE has left the service area. The method further comprises initiating application context relocation in response to determining that the UE has left the service area.

In contrast to existing methods, the proposed method allows application context relocation to be triggered automatically by a network entity in the operator network (such as the EES). The network entity subscribes directly to UE location monitoring and automatically triggers application context relocation when required (i.e., when the UE leaves the service area of the application server).

The proposed method monitors the location of the UE within the operator network and triggers context relocation directly at the network entity in the operator network (e.g., at an edge enabler server, EES), rather than relying on the UE or AS to trigger context relocation.

Moreover, the "location" of the UE may be monitored by the network entity in terms of network topology, rather then in terms of a geographical location. In prior methods, it may be necessary for the UE or application server to translate the UE location from a geographical location to a network location. This may be problematic for the UE or application server to translate, at least because the network cell IDs are different for different operators.

An "application context" is a set of data that must be saved to allow an application to be interrupted and later continued on a different application server. Application context relocation is the process by which the application is transferred from one application server to another, so that the application client running on the UE transfers seamlessly to an application server having a shorter data route.

The network entity (such as an EES) may reside in an edge data network (EDN). The edge data network may be owned and operated by the core network owner. For example, the core network owner may have control of EES and EAS locations. Advantageously a network entity in the edge data network (such as the EES) may be aware of the network routing information to control data transfer to the application servers.

The EDN may be considered as an extension of the core network. Alternatively, the EDN may be considered separate from the core network but is advantageously administered by the same operator as the core network (the operator network owner). As a result, the network routing information is available within the EDN.

The method may be performed by a network entity that is configured to manage application server discovery. Application server discovery is a process by which the network entity arranges for a client application on the UE to connect to a suitable application server for providing data services to the application client running on the UE.

The network entity may also be configured to manage the application server handling the services by a process of application context relocation, to connect the client application to a more suitable application server when circumstances change (for example, the UE location changes, the network topology changes and/or the application server load changes).

The network entity may be configured to manage UE data routing (data plane routing) for UE data sessions. This may involve configuring data routing between endpoints. Data routing may change due to changing network conditions, even when the endpoints themselves do not change. In other words, the data plane routing may change independently of an application context relocation process.

The method may be performed by a network entity (e.g., a server) in a telecommunications network. The method may be performed by an edge enabler server EES or by a separate standalone server.

Advantageously, the EES network entity is the focal point of the application server discovery process. Each of the application servers registers with the EES for application server discovery by the UE, and the application server discovery request from the UE is sent to the EES. Therefore, by also performing UE location monitoring at the EES, the process of application context relocation may be performed more efficiently.

Advantageously, the same network entity is responsible for application server discovery, and application context relocation. Therefore, the network entity is well-placed to provide a list of suitable application servers to the UE immediately on initiation of context relocation.

Moreover, the network entity is preferably also configured to manage UE data routing. Therefore, the network entity is already aware of the network routing information (including core network routing information, such as N6 routing information, N3 routing information, N4 routing information and N9 routing information) and can implement the data plane routing between the UE and the application server, without this information being shared outside the network.

Additionally, the network entity is also configured to monitor the UE location. Therefore, the burden of location monitoring is taken away from the UE and/or application server. This may extend the battery life of the UE.

Determining a "location" of the UE may comprise determining a network location of the UE, in terms of a serving cell ID or tracking area identity, TAI. Alternatively, determining a location may comprise determining a geographical location of the UE (e.g., GPS coordinates).

The "request" received from the UE may be an "EAS discovery request", as defined in 3GPP TS 23.558.

The "request" from the UE for the application client to connect to an application server may be a request to connect to a suitable application server, rather than a request to connect to a particular application server. The UE may rely on the network to provide one or more suitable servers.

The method may be performed by a network entity in the telecommunications network. The network entity may be in a core network of the telecommunications network. Alternatively, the network entity may be in an edge data network of the telecommunications network. Examples provided in this application refer to the network entity as an edge enabler server, EES, in an edge data network of the telecommunications network. However, this is not the only network entity suitable for performing the methods described. The methods could equally be performed by a standalone server in the EDN. Alternatively, the methods could be performed by a standalone server or pre-existing network entity in the core network.

The method may further comprise receiving one or more registration requests from one or more corresponding application servers, wherein each of the one or more registration requests comprises profile information for the corresponding application server. The method may further comprise, for each registration request, authenticating the corresponding application server and, if authentication is successful, registering the corresponding application server by storing the profile information to provide a database of the one or more registered application servers.

The method may further comprise authenticating the UE and/or authenticating the application client (which may also be referred to as an "edge enabler client", EEC).

The profile information may comprise the service area of the application server. In other words, the application server declares its service area when it registers with the EES. The step of determining a service area of the selected application server may comprise looking up the service area of the selected application server in the database.

When an application server registers with the discovery service (e.g., provided by the EES), it may also provide a proposed expiration time for the registration. The one or more registered application servers may comprise the application servers whose registrations have not yet expired.

The method may further comprise determining a current location of the UE. The method may further comprise identifying one or more suitable application servers from the one or more registered application servers, wherein the suitable application servers are identified based on the current location of the UE and a respective service area for each of the registered application servers. If the one or more suitable application servers consists of exactly one suitable application server, the method may further comprise selecting the one suitable application server. If the one or more suitable application servers comprises a plurality of suitable application servers, the method may further comprise sending an indication of the plurality of suitable application servers to the UE and receiving an indication of the selected application server from the UE.

The request from the UE for the application client to connect to an application server may comprise a current location of the UE. Alternatively, the method may further comprise requesting a current location of the UE from the core network.

The service area of the selected application server may be a geographical area. Alternatively, the service area of the selected application server may be a coverage area defined with reference to one or more cell identifiers and/or one or more tracking area identities TAIs.

If the service area of the selected application server is a geographical area, determining the service area of the selected application server may comprise translating the geographical area to a coverage area defined with reference to one or more cell identifiers (and/or one or more TAIs).

The request to monitor the location of the UE may comprise the service area (of the selected application server).

Determining that the UE has left the service area may comprise receiving an indication that the UE has left the service area (e.g., from the monitoring function in the core network).

The request to monitor the location of the UE may comprise an event monitoring request sent to a network exposure function of a core network of the telecommunications network.

The core network may be a 3GPP core network, such as a 5G core network.

The event monitoring request may be of a type "AREA_OF _INTEREST", according to the standard defined in 3GPP TS 23.501, which is herein incorporated by reference.

The network entity may subscribe to UE location updates by sending UE location event requests to the core network. For example, the network entity may send UE location event requests to a NEF MonitoringEvent API of the core network.

Alternatively, determining that the UE has left the service area may comprise receiving an updated location of the UE (e.g., periodically) and determining that the UE has left the service area based on the updated location.

The method may further comprise sending a response to the UE to enable the application client to connect to the selected application server.

The selected application server may be referred to as a source application server. Initiating application context relocation may comprise determining a target application server from the one or more registered application servers. Initiating application context relocation may further comprise sending an update message to the UE, the source application server, and the target application server, to connect the application client to the target application server and disconnect the application client from the source application server.

Initiating application context relocation may further comprise sending a message to a session management function, SMF, of the telecommunications network to implement data routing between the application client and the application server.

Initiating application context relocation may further comprise determining an updated UE location and identifying one or more suitable application servers, based on the updated UE location. The target application server may be selected from the one or more suitable application servers.

The method may further comprise determining a service area of the target application server. The method may further comprise sending a request to monitor a location of the UE, the request comprising the service area of the target application server. The method may further comprise determining that the UE has left the service area of the target application server. The method may further comprise initiating application context relocation in response to determining that the UE has left the service area of the target application server.

In other words, once application context relocation has been performed, the network entity may recommence UE location monitoring using the service area of the new application server. In this way the network entity can ensure that the client application is connected to the best application server, despite changes in UE location and network conditions.

The method may further comprise sending an indication to the UE that the UE is not required to monitor its own location with respect to the service area.

As a result of the network entity undertaking the role of UE location monitoring for the application client, the UE is not required to monitor its own location with respect to the service area of the selected application server. As a result, power saving at the UE may be realised and the battery life of the UE may be improved.

In this way, the task of location monitoring may be relocated to a centralised entity, which is performing location monitoring for a plurality of application clients (and for a plurality of UEs). Performing the location monitoring role centrally in the network may give rise to improvements in efficiency.

Advantageously, the steps of the method may all be performed by the same network entity. By performing the method steps at an entity within the operator network, the entity performing the steps has access to the network routing information required to select a suitable application server and determine when application context relocation is required.

Alternatively, some of the steps may be performed elsewhere in the network. Nevertheless, the following steps are preferably performed by the same network entity:
receiving the request for the application client to connect to an application server;
determining the selected application server;
sending the request to monitor the location of the UE;
determining that the UE has left the service area; and
initiating application context relocation in response to determining that the UE has left the service area.

Advantageously, by performing the above steps of the method at the same network entity. The entity responsible for application server discovery is also responsible for application context relocation. As previously discussed, performing the steps at a same network entity is more efficient and may result in improved application server selection to improve network efficiency and application client performance.

A network entity configured to initiate application context relocation in a telecommunications network is also provided. The network entity is configured to perform the following steps:
receiving a request from a user equipment, UE, for an application client running on the UE to connect to an application server selected from one or more registered application servers;
determining a selected application server from the one or more registered application servers;
   determining a service area of the selected application server;
   sending a request to monitor a location of the UE;
   determining that the UE has left the service area; and
   initiating application context relocation in response to determining that the UE has left the service area.

A "network entity" may not be a single server. Instead, the functionality may be provided by a plurality of geographically separate servers. For example, the role of an edge enabler server in a network may be performed by a plurality of localised edge enabler servers. Nevertheless, these servers may operate together as a single "network entity". In this context a "network entity" is a functional term and is intended to refer to a logical element performing a defined role in the network, rather than a single physical server carrying out the role.

Nevertheless, the network entity performing the method steps may be a single physical server in some examples (or a pair or cluster or servers operating as a single server instance). In this case, the steps of managing application discovery for a particular UE and undertaking location monitoring for the UE until it leaves the service area of the application server may be performed by a single server instance. For example, an EES server instance may be operating in an edge data network local to the UE and therefore would perform the required discovery and application context relocation functions for the UE. Other EES instances that are further from the UE (fulfilling the same roles in other locations) may not be involved with the discovery and/or application context relocation methods (at least until the UE leaves the area, at which point another EES instance may fulfil the role).

A computer program is also provided. The computer program comprises instructions that, when executed on a processor, cause the processor to perform a method as described above.

### Brief description of the drawings

The invention is described with reference to a number of non-limiting examples illustrated by the following drawings.
Fig. 1 illustrates selection of a shortest route from UE-hosted application to an application server.
Fig. 2 illustrates the role of the Edge Enabler Server EES in UE location monitoring to initiate application context relocation in order to move the client application from a first application server to a second application server.
Fig. 3 illustrates the EAS Registration procedure.
Fig. 4 illustrates the EAS Discovery procedure.
Fig. 5 illustrates the subscribe operation between the EAS and the EES for ACR management event notifications.
Fig. 6 illustrates a high level overview of ACR.
Fig. 7 illustrates the S-EES detecting, deciding and executing ACR from the S-EAS to the T-EAS.
Fig. 8 illustrates a flowchart of an example method of initiating application context relocation in a telecommunications network. The method comprises:
   at step 801: receiving a request from a UE for an application client running on the UE to connect to an application server;
   at step 802: determining a selected application server from one or more registered application servers;
   at step 803: determining a service area of the selected application server;
   at step 804: sending a request to monitor a location of the UE;
   at step 805: determining that the UE has left the service area; and
   at step 806: initiating application context relocation in response to determining that the UE has left the service area.

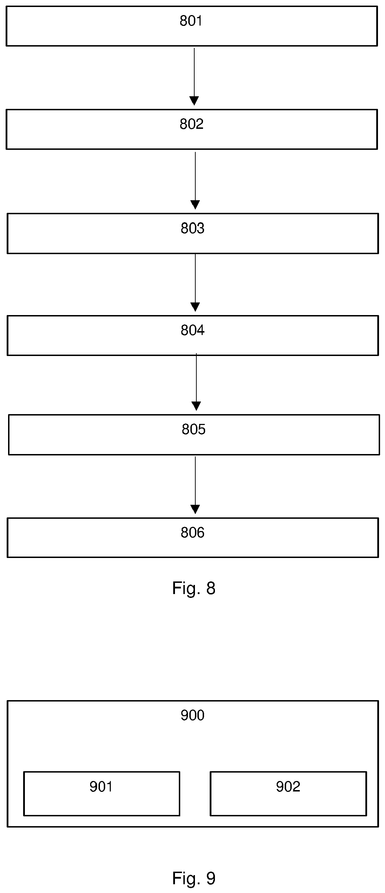

Fig. 9 illustrates a schematic of an example network entity 900. The network entity 900 comprises a processor 910 and a communications interface 902.

### Detailed Description

APIs and procedures to enable application context relocation are described in 3GPP TS 23.558, which is herein incorporated by reference. In one example, application context relocation may be triggered if a UE moves out of a service area of an application server. In another example, application context relocation may be triggered if an application server needs to load balance. A trigger event is needed to initiate the application context relocation. The trigger event is detected by a detection entity, which is the UE or application server in most cases. "Application context relocation" may be referred to simply as "context relocation" in some examples.

The UE ("edge enabler client", EEC) and edge application server (EAS) can potentially perform the role of the detection entity. In the technical specification, the edge enabler server (EES) is also listed as a potential detection entity (e.g. in clause 8.8.2.5 of 3GPP TS 23.558 "S-EES executed ACR"). However, TS 23.558 does not include any procedure steps that enable an EES to detect an initial trigger event. Therefore, the current procedures do not provide for an EES to initiate application context relocation. The trigger event must be detected by another entity, such as the application server or UE.

In some examples, UE location is typically used as the trigger event. Although many procedures in TS 23.558 include the EES passing UE location requests to the 5G core, the EES is not able to subscribe to UE location updates itself. Moreover, the EES is not listed as a consumer of the UELocationAPI (see Table 8.6.2.4.1-1 of 3GPP TS 23.558).

The present disclosure therefore proposes an update to current procedures to enable the EES to subscribe to UE location updates. In some examples, it is proposed that the EES uses the standardized NEF MonitoringEvent API to monitor an AREA_OF_INTEREST corresponding to the service area of the source application server, in order to detect when the updated UE location requires an application context relocation.

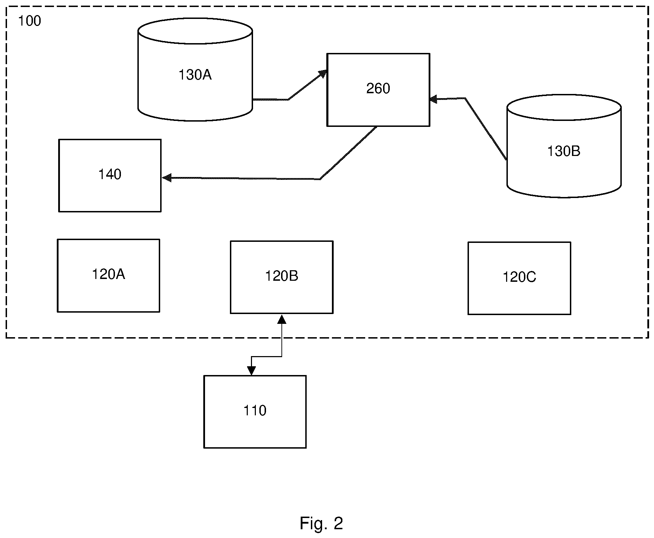

Fig. 2 illustrates the role of the Edge Enabler Server EES 260 in UE location monitoring to initiate application context relocation in order to move the client application from a Source Edge Application Server S-EAS 130A to Target Edge Application Server T-EAS 130B.

In a first step, the application servers 130A and 130B provide their respective service areas to the Edge Enabler Server EES 260, which is performing an Edge Enabler function.

In a second step, the Edge Enabler function uses standardized location monitoring to detect when the UE 110 leaves the service area.

In a third step, the Edge Enabler function controls movement of the Application from the source application server 130A to the target application server 130B.

By monitoring UE location, the EES 260 is able to remove the responsibility of monitoring UE location from the UE 110 and EAS 130A.

The EES 260 is able to use the already standardized service area information provided by an EAS 130A to monitor UE location relative to service area.

The EES 260 has access to network topology information and may be capable of translating an EAS declared geographical service area to serving network specific parameters such as cell ID or tracking area identity TAI.

By transferring UE location monitoring responsibility to the EES 260, the need for the UE 110 or EAS 130A to have N6 routing information may be removed. This routing information can be complex to configure and varies depending on the serving 3GPP core network. Therefore, providing the routing information to the UE 110 or EAS 130A can be inefficient, may place additional burden on the UE or EAS and may lead to incorrect application server selection, which may in turn lead to network inefficiencies and poor application performance. Moreover, this can increase the power consumption of the UE and/or EAS and lead to poor battery performance of the UE. Therefore, by transferring UE location monitoring responsibility to the EES 260, UE / EAS performance may be improved, the network may be made more efficient and application performance may be improved. Moreover, since the role of location monitoring is not required the be performed by the UE, the battery life of the UE may be extended.

A brief explanation of a specific example according to the proposed solution is provided below:
1. An application server sends a register request (EAS registration) to the edge enabler server (EES). The service area of the EAS is included in this register request.
2. The EES stores a profile of the EAS, including the service area of the EAS (the area of interest).
3. Optionally, the EES potentially translates the service area from a geographical area (e.g., in terms of GPS co-ordinates), to a topological area (e.g., in terms of network cell IDs, tracking area identities, and the like).
4. A UE sends an EAS discovery request to the EES to find a suitable application server (EAS) for its current location.
5. The EES returns information on one or more suitable EASs.
6. If only one EAS is returned, the EES begins monitoring the location of the UE relative to the service area of this one returned EAS by sending an event monitoring request of type "AREA_OF_INTEREST" to the 3GPP core network, specifically to the network exposure function (NEF). The AREA_OF_INTEREST is the service area of the single discovered EAS.
7. If the UE has a choice of EASs, then the UE sends an EAS selection request to the EES indicating which EAS it has selected.
8. The EES performs step 6. above for the selected EAS.
9. The EES is able to detect when the UE moves out of the service area of its current EAS, find a new EAS for the UE and send relevant update information to the UE, the current EAS, and the new EAS in order to move the server side of the application hosted on the UE.

At least steps 3, 6, and 9 described above are not found in existing methods and are provided in accordance with methods defined in the present disclosure.

A specific example of the proposed solution is described in detail below in the context of 3GPP TS 23.558. Material and drawings from this technical specification are included for background and to provide context for the invention. No claim is made to material comprised in the existing technical specification (3GPP TS 23.558 V19.0.0). Numbering from 3GPP TS 23.558 is retained for ease of reference. References to clauses relate to 3GPP TS 23.558, unless otherwise specified.

3GPP TS 23.558 includes an application context relocation scenario that is managed by the EES (clause 8.8.2.5). In this EES managed ACR scenario, the trigger detected by the EES for relocation is user plane path change, which is not the initial event that prompts application context relocation but is a consequence of an in-progress relocation. The initial event that prompts application context relocation is typically detecting that a UE has moved out of the service area of its current EAS.

Allowing the EES to monitor UE location would remove the burden of tracking UE location from the EEC and EAS and simplify ACR for an application developer.

During EAS registration, the EES receives the service area of the registering EAS. A step is added to EAS registration, EAS discovery, or EAS selection, such that the EES is able to monitor location events generated by the SMF for the area of interest (service area) of the EAS. This allows the EES to prompt application context relocation independently of EEC or EAS.

Moreover, the EES is well placed in the architecture to translate a geographical service area, which is understood by the application, to a topological service area understood by the 3GPP core network.

### 8.4.3.2.2 EAS registration

Pre-conditions:
1. The EAS has been configured with an EASID;
2. The EAS has been configured with the address (e.g. URI) of the EES; and
3. Both the EAS and EES have the necessary credentials to enable communications.

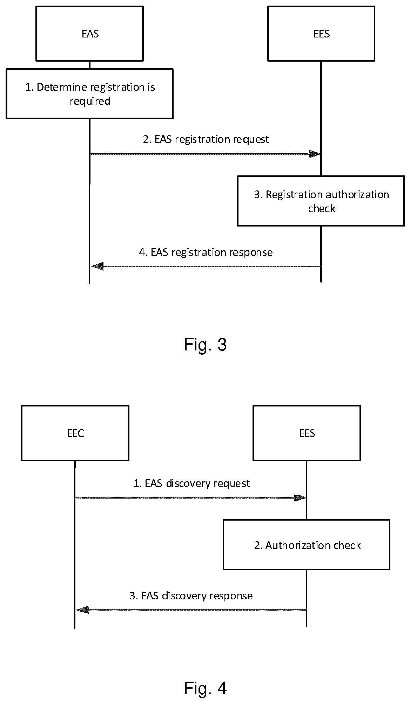

Fig. 3 (corresponding to Figure 8.4.3.2.2-1 of 3GPP TS 23.558) illustrates the EAS Registration procedure.
1. The EAS determines that registration to the EES is needed (e.g. the EAS is instantiated and started up).
2. The EAS sends an EAS registration request to the EES. The request shall include the EAS profile and may include proposed expiration time for the registration.
3. The EES performs an authorization check to verify whether the EAS has the authorization to register on the EES.
4. Upon successful authorization, the EES stores the EAS Profile for later use (e.g. for serving EAS discovery requests received from EECs, **and/or, in accordance with the present disclosure, for subscriptions to monitor EAS service area for "ACR control",** etc.) and replies to the EAS with an EAS registration response. If the request includes bundle ID, the EES stores the received information. The EES may provide an expiration time to indicate to the EAS when the registration will automatically expire. To maintain the registration, the EAS shall send a registration update request prior to the expiration time. If a registration update request is not received prior to the expiration time, the EES shall treat the EAS as implicitly de-registered.

### 8.5 EAS discovery

### 8.5.1 General

Discovery procedures enable entities in an edge deployment to obtain information about EAS and their available services, based on specified criteria of interest.

EAS discovery enables the EEC to obtain information about available EASs of interest (e.g. instantiated EASs registered with the EES and instantiable EASs that may be created when needed). The discovery of the EASs is based on matching EAS discovery filters provided in the request.

When multiple EASs are discovered for a specific AC, the EEC may select one or more EASs to enable AC communication with one of the selected EASs. The selection algorithm is outside the scope of this specification. Once the EAS is selected, the EEC may subscribe for the ACR event notifications at the EES of the selected EAS, as described in clause 8.8.3.5.2. The EDN configuration information received from ECS may be used for establishing a connection to EAS(s).

EAS discovery may be initiated by the EEC when a certain trigger condition at the UE is met. Some examples are as follows:
- AC related updates available at the EEC (e.g. due to AC installation/re-installation/activation), AC requesting application server access;
- Lifetime received via EAS discovery response specified in clause 8.5.3 is expired; or
- EEC detects the need of application context relocation as in clause 8.8.

NOTE: When the EEC decides to perform EAS discovery is up to EEC implementation.

If the EASs consisting of the EAS bundle register to different EESs and if the Bundle Type of the EAS bundle is set to Direct bundle, then the EEC sends the EAS discovery request message to the associated EES for the bundle EAS information.

### 8.5.2 Procedures

### 8.5.2.1 General

Following procedures are supported for EAS discovery:
- Request-response procedure;
- Subscribe-notify procedures for EAS discovery and EAS dynamic information subscription, comprising:
   - Subscription procedure;
   - Subscription update procedure; and
   - Unsubscribe procedure;

### 8.5.2.2 Request-response model

Pre-conditions:
1. The EEC has received information (e.g. URI, IP address) related to the EES;
2. The EEC has received appropriate security credentials authorizing it to communicate with the EES as specified in clause 8.11; and
3. The EES is configured with ECSP's policy for EAS discovery.

NOTE 1: Details of ECSP's policy are out of scope.

Fig. 4 (corresponding to Figure 8.5.2.2-1 of 3GPP TS 23.558) illustrates the EAS Discovery procedure.
1. The EEC sends an EAS discovery request to the EES. The EAS discovery request includes the requestor identifier [EECID] along with the security credentials and may include EAS discovery filters, EEC service continuity support, and may also include UE location to retrieve information about particular EAS(s) or a category of EASs, e.g. gaming applications, or Edge Applications Server(s) available in certain service areas, e.g. available on a UE's predicted or expected route. The request may include an EAS selection request indicator.
2. Upon receiving the request from the EEC, the EES checks if the EEC is authorized to discover the requested EAS(s). The authorization check may apply to an individual EAS, a category of EASs or to the EDN, i.e. to all the EASs. If UE's location information is not already available, the EES obtains the UE location by utilizing the capabilities of the 3GPP core network as specified in clause 8.10.3. If EAS discovery filters are provided by the EEC, but it does not contain Application group profile, the EES identifies the EAS(s) based on the provided EAS discovery filters and the UE location.

When the bundle EAS information is provided, then;
- If bundle EAS information includes EAS bundle identifier, the EES identifies all or part of the EAS(s) associated with the same EAS bundle identifier.
- If bundle EAS information includes a list of EASIDs, the EES identifies the EASs which are all or part of the EAS bundle.

If the EEC indicates that service continuity support is required, when identifying the EAS, the EES shall take the indication which ACR scenarios are supported by the AC, the EEC, the EES and the EAS and which of these are preferred by the AC into consideration. The EES may select one EAS and determine whether to perform application traffic influence for this AC based on AC's service KPI or EAS's service KPI in desired response time, when the EAS does not perform traffic influence in advance.

When EAS discovery filters are not provided, then:
- if available, the EES identifies the EAS(s) based on the UE-specific service information at the EES and the UE location;
- EES identifies the EAS(s) by applying the ECSP policy (e.g. based only on the UE location);

When EAS discovery filters contain Application group profile, the EES checks whether information about common EAS and related Application Group ID is available or not. If the common EAS information related to the Application Group ID is:
- not available, then based on the policy if EES needs to select the common EAS, the EES identifies an EAS for the Application Group ID based on the provided EAS discovery filters such as KPIs, UE-specific service information or the ECSP policy. Furthermore, the EES stores the common EAS information and related Application Group ID.
- available at the EES, then the EES provides information of that EAS as result for EAS discovery.

NOTE 2: The EES may have previously determined and stored the common EAS for Application group ID, or the EES may have received the common EAS selection information for Application group ID during the common EAS announcement procedure.

When the ECS-ER is not available and the EES selects the common EAS, the selected common EAS shall be announced to other EES(s) as per procedure specified in clause 8.19.

When the ECS-ER is available and common EAS information corresponding to the Application Group ID is not available, then the EES identifies one EAS for the group and interacts with the ECS-ER to store the common EAS information as described in clause 8.20.2.3. If common EAS information is already available corresponding to the Application Group ID in the repository, then the ECS-ER returns the common EAS information to the EES as described in clause 8.20.2.3.

NOTE 3: Details of the UE-specific service information and how it is available at the EES is out of scope.

NOTE 4: Both steps are evaluated prior to sending a response.

Upon receiving the request from the EEC, the EES may also collect edge load analytics from ADAES (as specified in clause 8.8.2 of TS 23.436) or performance data from OAM to find whether the EAS(s) satisfies the Expected AC service KPIs or the Minimum required AC Service KPIs.

Upon receiving the request from the EEC, if the EEC does not indicate EAS Instantiation Triggering Suppress in the EAS Discovery request, the EES may trigger the ECSP management system to instantiate the EAS that matches with EAS discovery filter lEs (e.g. ACID) as in clause 8.12.

Otherwise, upon receiving the request from the EEC, if the EEC indicates EAS Instantiation Triggering Suppress in the EAS Discovery request and the EES supports such capability, the EES determines not triggering the ECSP management system to instantiate the EAS and may determine Instantiable EAS Information for EAS(s) that are instantiable but not yet instantiated and match the EAS discovery filter lEs. Instantiable EAS Information is provided in the EAS Discovery response and includes the EASID(s) and, for each EASID, the status indicating whether the EAS is instantiated or instantiable but not yet instantiated.

If the EEC provides in the EAS discovery request the EAS selection request indicator, the EES selects EAS satisfying the EAS discovery filter or based on other information (e.g. ECSP policy) as described above (if no EAS discovery filter received), and then provides the selected EAS information to the EEC in the discovered EAS list of EAS discovery response.

NOTE 5: Without EAS selection request indication, the EES handling is as per R17 procedure.
3. If the processing of the request was successful, the EES sends an EAS discovery response to the EEC, which includes information about the discovered EASs and Instantiable EAS Information. For discovered EASs, this includes endpoint information. Depending on the EAS discovery filters received in the EAS discovery request, the response may include additional information regarding matched capabilities, e.g. service permissions levels, KPIs, AC locations(s) that the EASs can support, ACR scenarios supported by the EAS, etc. The EAS discovery response may contain a list of EASs and Instantiable EAS Information. This list may be based on EAS discovery filters containing a Geographical or Topological Service Area, e.g. a route, included in the EAS discovery request by the EEC. When the discovered EAS is for a certain application group, then the Application Group ID is also included in the response message. If the discovered EAS is registered to another EES, then the EES endpoint of the EES where the discovered EAS is registered is also included in the response message.

When the EES determines to trigger the EAS instantiation, then the response may indicate that the EAS instantiation is in progress so that the detailed EAS profile information will be available later. When EEC receives the EAS instantiation in progress indication, the EEC may send EAS discovery subscription request message or send EAS discovery request message later to the EES for obtaining updated EAS information.

**In accordance with the present disclosure, if the discovered EAS(s) have subscribed to ACR management event type "ACR control" then the EES shall send a monitor event request for the EAS(s) service area(s) to the core network.**

If the EES is unable to determine the EAS information using the inputs in the EAS discovery request, UE-specific service information at the EES or the ECSP policy, the EES shall reject the EAS discovery request and respond with an appropriate failure cause.

If the EEC is not registered with the EES, and ECSP policy requires the EEC to perform EEC registration prior to EAS discovery, the EES shall include an appropriate failure cause in the EAS discovery response indicating that EEC registration is required.

If the UE location and predicted/expected UE locations, provided in the EAS discovery request, are outside the Geographical or Topological Service Area of an EAS, then the EES shall not include that EAS in the discovery response. The discovery response may include EAS(s) that cannot serve the UE at its current location if a predicted/expected UE location was provided in the EAS discovery request.

Upon receiving the EAS discovery response, if the EEC selects an EAS which is instantiated (i.e., an EAS profile was provided), the EEC uses the endpoint information for routing of the outgoing application data traffic to EAS(s), as needed, and may provide necessary notifications to the AC(s). The EEC may use the border or overlap between EAS Geographical Service Areas for service continuity purposes. The EEC may cache the EAS information (e.g. EAS endpoint) for subsequent use and avoid the need to repeat step 1. If the Lifetime IE is included in the response, the EEC may cache the EAS information only for the duration specified by the Lifetime IE.

Upon receiving the EAS discovery response, if the EEC selects an EAS which is instantiable but not yet instantiated (i.e. an EAS profile is not provided), the EEC sends the EAS information provisioning request indicating the selected EASID as in clause 8.15.

NOTE 6: Within the duration specified by the Lifetime IE, the cached EAS Profile can be updated (e.g. according to notifications from the EES for changes of EAS information due to EAS status change) or the cached EAS Profile can be invalidated due to new EAS information discovery (e.g. due to UE mobility). The EEC can update or invalidate the cached EAS information (e.g. on PDU Session Release or Modification Command).

NOTE 7: The AC can cache the EAS information (e.g. EAS endpoint) for subsequent use. In the case of the cached information needing to be updated or invalidated, the mechanisms for the EEC to notify the AC is up to implementation and is not specified in the current release of the present document.

NOTE 8: The EEC can use the EAS information provided by the discovery procedure to perform service continuity planning, for example when ultra-low latency ACR is required.

If the EAS discovery request fails, the EEC may resend the EAS discovery request, taking into account the received failure cause. If the failure cause indicated that EEC registration is required, the EEC shall perform an EEC registration before resending the EAS discovery request.

NOTE 9: As long as a proper EAS (e.g. considering expected AC service KPIs included in EAS discovery request) is discovered and selected by the EES, EEC of a constraint UE can stop sending EAS discovery to rest candidate EES(s), and provide the selected EAS information to AC.

### 8.6.3 ACR management events

### 8.6.3.1 General

The EES exposes ACR management event notifications of one or more UEs to an EAS. EES also uses ACR management event notifications to inform the EAS of the need to start an ACT or cancel a previously started ACT. **In accordance with the present disclosure, ACR management event notifications exposed by the EES may rely on the NEF northbound API for traffic influence event of user plane path change event or monitoring events area of interest or application start/stop.**

This capability exposed by the EES supports:
- "User plane path change". This event supports to detect user plane path change for the application traffic and report the corresponding notification with user plane path change to the EAS.
- "ACR monitoring". This event supports to detect user plane path change for the application traffic, discover the T-EAS(s), and report the corresponding notification with the discovered T-EAS(s).
- "ACR facilitation". This event supports to detect user plane path change for the application traffic, make the decision for ACR, discover the T-EAS(s), influence the traffic for the selected T-EAS and report the corresponding notification with the selected T-EAS.
- **In accordance with the present disclosure, "ACR control". This event supports the EES monitoring UE location against EAS service area, detect user plane path change for the application traffic, make the decision for ACR, discover the T-EAS(s), influence the traffic for the selected T-EAS and report the corresponding notification with the selected T-EAS.**
- "ACT start/stop". This event informs the EAS the need to start or stop an ACT towards or from another EAS for a particular UE. The "ACT start" can also inform the EAS of the ACR parameters.
- "ACR Selection". This event informs the EAS about the selected ACR scenario list for each AC using the EAS.

The availability of the ACR management event notifications relying on the user plane path management event notification service exposed by 5GC may change due to UE mobility between 5GC and EPC. If an EES exposes ACR event notifications to EAS(s) for a UE by relying on the 3GPP Core Network northbound API for user plane path management notifications, the EES monitors the availability of the northbound API for UE(s) served by the EAS (e.g. by utilizing Nnef_APISupportCapability as described in 3GPP TS 23.502) and provides the availability information to the EAS accordingly. If CAPIF is supported, the EES determines if the ACR management event API is available and able to be exposed to the EAS for a UE via the Availability of service APIs event notifications provided by the CAPIF core function as defined in 3GPP TS 23.222.

### 8.6.3.2 Procedures

### 8.6.3.2.1 General

### 8.6.3.2.2 Subscribe

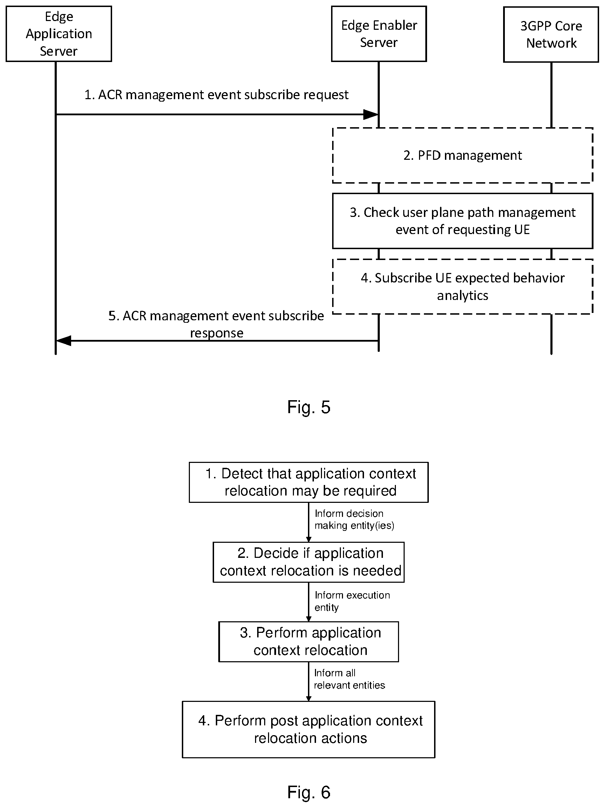

Fig. 5 (corresponding to Figure 8.6.3.2.2-1 of 3GPP TS 23.558) illustrates the subscribe operation between the EAS and the EES for ACR management event notifications.
1. The EAS sends ACR management event subscribe request (e.g. tracking the UE's user plane path change continuously). The EAS shall include UE Identifier or UE Group ID for "user plane path change", "ACR monitoring" and "ACR facilitation" events.
   a. The EAS may include the "user plane path change" event to indicate the EES to notify the EAS when the EES detects there is a user plane path change for the application traffic and the EAS may include Subscription Type (Early and/or Late notification defined in clause 5.6.7 of 3GPP TS 23.501) and/or Indication of EAS Acknowledgement in the event subscription.
   b. The EAS may include the "ACR monitoring" event to indicate the EES to notify the EAS when the EES detects there is a need for the ACR (e.g. when T-EAS is available at the target DNAI). The EAS may also include the Event Filters to specify the conditions to match for notifying the event, e.g., inter-EDN mobility, intra-EDN mobility.
   c. The EAS may include the "ACR facilitation" event to request the EES to make the decision for ACR, discover the T-EAS(s), influence the traffic for the selected T-EAS and notify the S-EAS of the selected T-EAS. If required, the EAS can add an indication to request service continuity planning.
   **d. In accordance with the present disclosure, the EAS may include the "ACR control" event to request the EES to detect that ACR is needed, make the decision for ACR, discover the T-EAS(s), influence the traffic for the selected T-EAS and notify the S-EAS of the selected T-EAS. If required, the EAS can add an indication to request service continuity planning.**
   e. The EAS may include the "ACT start/stop" event to indicate the EES to notify the EAS of the need for start or stop ACT to or from another EAS for a particular UE. The EES may also use "ACT start" event to notify the EAS of the ACR parameters.
   f. The EAS may include the "ACR Selection" event to indicate the EES to notify the EAS of the selected ACR scenario list applicable to ACs using the EAS.
2. The EES checks if the EAS is authorized for this operation. If authorized, and if the subscription in step 1 includes at least one of the "user plane path change", "ACR monitoring", "ACR facilitation", **and, in accordance with the present disclosure, "ACR control"** events, the EES may invoke the PFD management procedure with the 3GPP Core Network as described in 3GPP TS 23.682 and 3GPP TS 23.502 with an application id. The traffic filter information sent by the EAS is used in requesting PFD management service. Further the EES provides the same application id for requesting user plane path management event service. **In accordance with the present disclosure, if the subscription in step 1 includes the "ACR control", the EES provides the same application id if it subsequently requests the monitoring event service for the service area of the EAS.**

NOTE 1: PFD management can be optionally supported in MNO. If EES cannot invoke step 2a, it responds EAS with appropriate error.

NOTE 2: The EES can map the EASID into the application id that is used to invoke the PFD management procedure.
3. If the subscription in step 1 includes at least one of the "user plane path change", "ACR monitoring", "ACR facilitation", **and, in accordance with the present disclosure, "ACR control"** events, the EES checks if there exists a subscription with the 3GPP core network for the user plane path management event notifications corresponding to the UE information obtained in step 1 as described in 3GPP TS 23.501 and 3GPP TS 23.502, which may be triggered by other EAS for the same UE. The EES checks the availability of the user plane path management event service for the UE(s).
   a. if a subscription with 3GPP core network does not exist, then the EES subscribes with the 3GPP core network (PCF, NEF or SCEF+NEF) for the user plane path management event notifications of the UE(s) as described in 3GPP TS 23.501 and 3GPP TS 23.502 If the EAS provides Subscription Type and/or Indication of EAS Acknowledgement, the EES include the type of subscription and/or the indication of "AF acknowledgement to be expected" as information on AF subscription to corresponding SMF events within the AF Request;
   b. if a subscription with 3GPP core network exists, then the EES uses the locally cached user plane path management event notification information of the UE(s) to respond to the EAS. The EES stores the subscription related to the EAS.
4. If the event is "user plane path change", the EES may subscribe to UE expected behaviour analytics (UE mobility and UE communication) for the group of UEs as described in 3GPP TS 23.288.
5. If EAS is authorized, the EES responds with ACR management event subscribe response. If EAS is not authorized, the EES provides a rejection response with cause information.

If the target UE(s) and the 3GPP network support mobility between 5GC and EPC, the EES monitors the availability of the user plane path management event notification from the 3GPP network by utilizing Nnef_APISupportCapability or Availability of service APIs event notifications provided by the CAPIF core function.

### 8.6.3.3 Information flows

### 8.6.3.3.1 General

The following information flows are specified for ACR management event API:
- ACR management event subscription, notification, subscription update and unsubscribe.

### 8.6.3.3.2 ACR management event subscribe request

**In accordance with the present disclosure, the "ACR control" event is added to the available event IDs in Table 8.6.3.3.2-1, which describes the information elements for an ACR management event subscribe request from the EAS to the EES. The traffic filter information is applicable for the "ACR control" event.**

### 8.8 Service continuity

### 8.8.1 General

### 8.8.1.1 High level overview

When a UE moves to a new location, different EASs can be more suitable for serving the ACs in the UE. Such transitions can result from a non-mobility event also, requiring support from the enabling layer to maintain the continuity of the service.

This clause describes the features that support service continuity for ACs in the UE to minimize service interruption while replacing the S-EAS, with a T-EAS.

Generally, one AC on the UE has one associated application context at the S-EAS. To support service continuity, this application context is transferred from the S-EAS to a T-EAS.

The capabilities for supporting service continuity provided at the Edge Enabler Layer may consider various application layer scenarios in which there may be involvement of AC and one or more EAS(s).

Following intra-EDN, inter-EDN, between EDN and Cloud, and LADN (overlapping LADN service areas) related scenarios are supported for service continuity:
- UE mobility, including predictive or expected UE mobility;
- Overload situations in S-EAS or EDN; and
- Maintenance aspects such as graceful shutdown of an EAS.

NOTE 1: The scenarios which require ACR for service continuity, cannot use non-overlapping LADNs.

NOTE 2: Overload situations in S-EAS or EDN can be captured based on edge load analytics via utilizing SEAL ADAE capability (see clauses 6.7 and 8.8 of TS 23.436), which provide statistics or predictions on the expected load of S-EAS or EDN.

NOTE 3: The ACR between EDN and the Cloud may be triggered if no suitable target EAS is found.

To support the need of ACR, following entity roles are identified:
- detection entity, detecting or predicting the need of ACR;
- decision-making entity, deciding that the ACR is required; and
- execution entity, executing ACR.

A detection entity detects the probable need for ACR by monitoring various aspects, such as UE's location or predicted/expected UE location and indicates to the decision-making entity to determine if the ACR is required. The EEC, EES and EAS can potentially perform the detection role:

A decision-making entity determines that ACR is required and instructs the execution entity to perform ACR. The decision-making entity makes a ACR decision to start the ACR execution. In different scenarios of ACR in 8.8.2, the EEC, EAS, EES can potentially perform the decision role respectively.

An execution entity performs ACR as and when instructed by the decision-making entity. ACR execution starts with T-EAS discovery, which can be triggered by EEC, EAS and EES.

NOTE 3: After a decision that another EAS is to serve the UE, the S-EAS can decide if the existing Application Context is transferred to the new EAS.

The EAS may utilize the following capabilities provided by the EES for supporting service continuity at the application layer:
- Subscribe to service continuity related events and receive corresponding notifications;
- Discover the T-EAS; and
- ACR from a S-EAS to a T-EAS.

The EES can utilize the following capabilities provided by the ECS for supporting service continuity at the application layer:
- Retrieve the T-EES.

The EEC may determine if the ACR is required by detecting that the UE moved or is predicted or expected to move outside the service area (see clause 7.3.3). The service area can be provided to the EEC by either the ECS during Service Provisioning or EES during EAS Discovery. For the PDU Session of SSC mode 3, if the UE receives PDU Session Modification Command as specified in clause 4.3.5.2 of 3GPP TS 23.502, the EEC may determine that the ACR is required. For IPv6 multi-homed PDU Session of SSC mode 3, the EEC may determine that ACR is required if the UE is notified of the existence and availability of a new IPv6 prefix as specified in clause 4.3.5.3 of 3GPP TS 23.502.

NOTE 4: For IPv6 multi-homed PDU Session of SSC mode 3, the EEC can be aware of the notification about the IPv6 prefix configuration due to change of PSA UPF based on the UE implementation.

**In accordance with the present disclosure, the EES may determine if the ACR is required by detecting that the UE moved or is predicted or expected to move outside the service area (see clause 7.3.3). An EAS provides the service area to the EES at EAS Registration. The EES uses the EAS service area to send a monitor event request to the 3GPP core network for that area of interest.**

After successful ACR:
- The EES is informed of the completion by the EAS; and
- The EEC is informed of the completion by the EES.

In general, a number of steps are required in order to perform ACR. The potential roles of an edge enablement layer in ACR include:
- providing detection events;
- selecting the T-EAS(s); and
- supporting the transfer of the application context from the S-EAS(s) to the T-EAS(s).

If the UE is connected to the 5GC, the EES/EAS acting as AF may utilize AF traffic influence functionality from the 3GPP CN as specified in 3GPP TS 23.502.

Fig. 6 (corresponding to Figure 8.8.1.1-1 of 3GPP TS 23.558) illustrates a high level overview of ACR.

ACR can be performed for service continuity planning, which means that the first three steps in Fig. 6 detection, decision and execution, are performed as defined in clause 8.8.1.2, e.g. when the UE is predicted to move outside the service area of the serving EAS. In such a case the T-EAS is to service the UE when it moves to the expected location.

EES can handle multiple ACR requests simultaneously. When there are multiple simultaneous ACR, the ACR shall be uniquely identified by ACID, EEC ID (or UE ID), S-EAS endpoint and T-EAS endpoint.

### 8.8.2.5 S-EES executed ACR

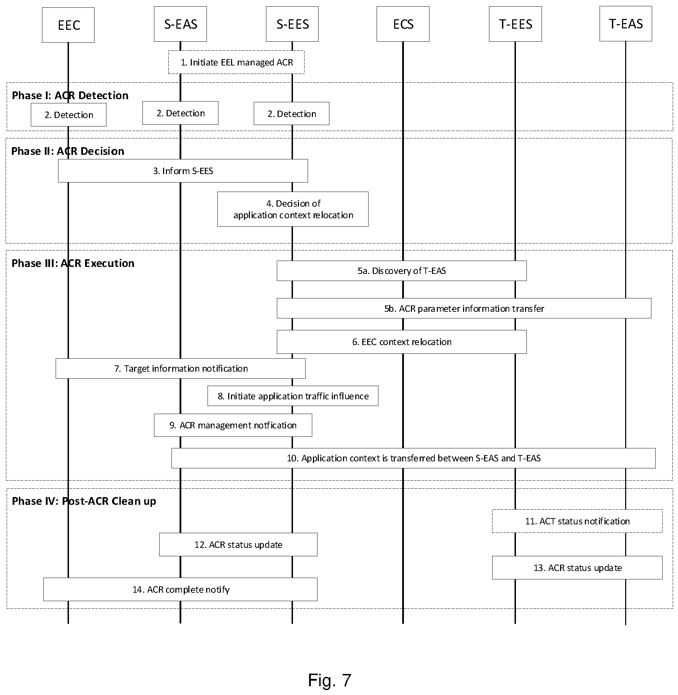

Fig. 7 (corresponding to Figure 8.8.2.5-1 of 3GPP TS 23.558) illustrates the S-EES detecting, deciding and executing ACR from the S-EAS to the T-EAS. This may include EELManagedACR by S-EES when initiated by S-EAS as per clause 8.8.3.6. The EEC or the S-EAS may also detect the ACR as illustrated in figure 8.8.2.5-1.

NOTE 1: For this clause, S-EAS either supports ACR detection capability or performs subscription for ACR management event to EES.

Pre-condition:
1. The AC at the UE already has a connection to the S-EAS;
2. The EEC is able to communicate with the S-EES;
3. The EEC has subscribed to receive ACR information notifications for target information notification events and ACR complete events from the S-EES, as described in clause 8.8.3.5.2;
4. The S-EAS optionally subscribed to receive ACR management notifications for "ACR facilitation" or "ACR control" events to the S-EES, in order to enable detection at S-EAS.
5. In case of EELManagedACR, the T-EAS has subscribed to receive ACT status notifications as described in clause 8.8.3.6.2.3.

The numbered steps illustrated in Fig. 7 are explained below.
1. The S-EAS may initiate EELManagedACR with S-EES as specified in clause 8.8.3.6. The S-EAS and S-EES negotiate an address of the Application Context storage to S-EES. The S-EAS puts the Application Context at this address which can be further accessed by the S-EES when the ACT is required.
In the EELManagedACR case, the S-EES executes steps 2 (i.e., S-EES is the detection entity), 4, 5, 6, 7, 8, 9, 10, 11, 13 and 14. Rest of steps are skipped.

Phase I: ACR Detection
2. Detection entities (S-EAS, S-EES, EEC) detect that ACR may be required and identify the ACID and Predicted/Expected UE location or Expected AC Geographical Service Area as described in clause 8.8.1.1 . Detection by the S-EES may be triggered in the following ways:
- by a User Plane path change notification received from the 3GPP Core Network due to S-EAS request for "ACR facilitation" event (see clause 8.6.3);
- **in accordance with the present disclosure, by an area of interest monitoring event notification or a subsequent User Plane path change notification received from the 3GPP Core Network due to S-EAS request for "ACR control"; or**
- due to step 1.
The detection entity may detect that ACR may be required for an expected or predicted UE location in the future as described in clause 8.8.1 .1.

Phase II: ACR Decision
3. The detection entity performs ACR launching procedure (as described in clause 8.8.3.4) with the ACR action indicating ACR determination and the corresponding ACR determination data. If the EEC or S-EAS detect the ACR event, the EEC or S-EAS may inform S-EES with ACID, and predicted/expected UE location or Expected AC Geographical Service Area in the ACR launching procedure.
4. The S-EES authorises the message if received. The S-EES decides to execute ACR based on the information received or local detection, and the information of EEC context or EAS profile, and then proceed the below steps. When the S-EES receives the predicted/expected UE location or Expected AC Geographical Service Area from the EEC or the EAS in ACR determination, or the S-EES received service continuity planning from EAS in ACR facilitation event subscription, then the S-EES will determine to monitor the UE mobility. If S-EES has received information of on-going ACR, then it should not initiate an ACR with the same ACR identity uniquely identified by ACID, EEC ID (or UE ID), S-EAS endpoint and T-EAS endpoint again per clause 8.6.3.2.3.

Phase III: ACR Execution
5a. The S-EES determines T-EES and T-EAS via the Discover T-EAS procedure in clause 8.8.3.2 of the present document. When in step 2 the ACR has been triggered for service continuity planning, then UE Location and Target DNAI values provided in the Retrieve T-EES procedure contain the expected UE Location and expected Target DNAI. The S-EES may decide not to perform ACR if T-EAS is not available. If T-EAS discovery results in no T-EAS, and if ACR to CAS is supported, then the procedure for ACR with CAS applies as specified in clause 8.8.2A.5.
5b. If required, the S-EES performs ACR parameter information procedure by sending the ACR parameter information request to the T-EES as described in clause 8.8.3.9. For example, when the ACR is for service continuity planning, and the S-EES has received it in ACR launch in step 2, the S-EES sends ACR parameter information request which includes Prediction expiration time.
6. If the T-EES is different than the S-EES and the EEC Context at the S-EES is not stale, the S-EES initiates EEC Context Push relocation with the T-EES as described in clause 8.9.2.3. Otherwise, if the T-EES is the same as the S-EES, EEC Context Push relocation is skipped.
7. The S-EES sends the target information notification to the EEC as described in clause 8.8.3.5.3.
   NOTE 2: Step 7 can be performed after step 5. The S-EES can send target information notification to the EEC immediately after having the target information in order to avoid EEC to initiate another ACR with the same identity
8. The S-EES may apply the AF traffic influence with the N6 routing information of the T-EAS in the 3GPP Core Network (if applicable).
9. The S-EES sends the ACR management notification (e.g. as notification for "ACR facilitation" event or "ACT start" event as described in clause 8.6.3 or due to step 1) to the S-EAS to initiate ACT between the S-EAS and the T-EAS.
10. The Application Context is transferred from S-EAS to the T-EAS at implementation specific time. In the case of EELManagedACR, the S-EES accesses the Application Context from the address as per step 1 and the S-EES and T-EES engage in the ACT from S-EAS to the T-EAS (obtained as per step 5) in a secure way. Further the T-EAS accesses the Application Context made available by the T-EES. If S-EAS performs the ACT directly with T-EAS, the specification of such process is out of scope of the present document. NOTE 3: The Application Context is encrypted and protected by the application layer. The S-EES and the T-EES engage in the packet level transport of the Application Context and they have no visibility to the content of the Application Context.

When in step 2 the ACR has been triggered for service continuity planning, if the UE does not move to the predicted location, the EEC does not connect to T-EES, the AC does not connect to the T-EAS.

NOTE 3: The S-EAS or T-EAS can further decide to terminate the ACR, and the T-EAS can discard the application context based on information received from EEL and/or other methods (e.g. monitoring the location of the UE). It is up to the implementation of the S-EAS and T-EAS whether and how to make such a decision.

NOTE 4: When in step 2 the ACR has been triggered for service continuity planning, the S-EAS and the T-EAS can wait for the UE to move to the predicted location before they perform the Post ACR Clean up steps 12 and 13 if it is the EAS monitoring whether the UE moves to the predicted or expected location. When the S-EAS and the T-EAS do not wait for the UE (e.g., if the UE does not move to the predicted location), the S-EAS and the T-EAS can perform Post ACR Clean up with failure messages.

NOTE 5: If the S-EAS and T-EAS are main EASs forming proxy bundle, other EASs of the bundle may transfer the application contexts in this step. How to execute ACT is out of scope of this document.

### Phase IV: Post-ACR Clean up

11. In case of EELManagedACR, once the ACT is successful, the T-EES sends an ACT status notification to the T-EAS as described in clause 8.8.3.6.2.4, indicating that the Application Context is available.
12. The S-EAS sends the ACR status update message to the S-EES as specified in clause 8.8.3.8.
13. The T-EAS sends the ACR status update message to the T-EES as specified in clause 8.8.3.8. If the status indicates a successful ACT, and that the EEC Context relocation procedure was attempted but failed, then the T-EES indicates the failure to the T-EAS with the ACR status update response.

NOTE 6: If the EDGE-3 subscription initialization result indicates failure, then the EAS can perform the required EDGE-3 subscriptions at the T-EES.

NOTE 7: Steps 12 and 13 can occur in any order. 14. If the status in step 12 indicates a successful ACT or in the EELManagedACR case, the S-EES sends the ACR information notification (ACR complete) message immediately to the EEC to confirm that the ACR has completed as specified in clause 8.8.3.5.3. For the service continuity planning case, if it is EES monitors the UE mobility, then only when S-EES detects the UE has moved to the predicted/expected UE location or Expected AC Geographical Service Area and the status in step 12 indicates a successful ACT, then the S-EES sends ACR information notification (ACR complete) message to the EEC when the ACR type is service continuity planning. If the EEC Context relocation procedure was attempted, then the notification includes EEC context relocation status IE, indicating the result of the EEC context relocation procedure. If the EEC context relocation status indicates that the EEC context relocation was not successful, then the EEC may perform the required EDGE-1 operations such as create subscriptions at the T-EES.

NOTE 8: The Application Client mechanism to support switchover of the application traffic to T-EAS is out of scope of the specification.

Fig. 8 illustrates a flowchart of an example method of initiating application context relocation in a telecommunications network. The method comprises:
at step 801: receiving a request from a UE for an application client running on the UE to connect to an application server;
at step 802: determining a selected application server from one or more registered application servers;
at step 803: determining a service area of the selected application server;
at step 804: sending a request to monitor a location of the UE;
at step 805: determining that the UE has left the service area; and
at step 806: initiating application context relocation in response to determining that the UE has left the service area.

Fig. 9 illustrates a schematic of an example network entity 900. The network entity 900 comprises a processor 910 and a communications interface 902.

Although specific embodiments have been described above, the skilled person will understand that various modifications and variations are possible. For example, whilst the disclosure is described in relation to existing network architecture, it will be understood that changes to the architecture (and/or nomenclature) are possible, but the present disclosure may still be applicable in this case. Also, combinations of any specific features shown with reference to one embodiment or with reference to multiple embodiments are also provided, even if that combination has not been explicitly detailed herein.

Where this application refers to a server, for instance, this may actually be a pair of servers (primary and failover), for redundancy.

Where this application refers to a "network entity" (such as an Edge Enabler Server), the skilled person would understand that the network entity may actually be provided by a plurality of servers that are geographically distributed. In this way, the network entity may provide functionality to any UE in a wide area, via a server that is local to the UE.

In the present invention, a UE may be a fixed or mobile device. Examples of the UE include various devices that transmit and receive user data and/or various kinds of control information to and from a base station. The UE may be referred to as a terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above methods are described in relation to a 5G/NR network, these methods, techniques, apparatuses, and systems may be applied to a variety of wireless multiple access systems. Examples of multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present invention is applied to 3GPP NR. However, the technical features of the present invention are not limited thereto. For example, although the following detailed description is given based on a mobile communication system corresponding to a 3GPP NR system, aspects of the present invention that are not specific to 3GPP NR are applicable to other mobile communication systems. Moreover, the technical features of the present invention may be applied to future iterations of multiple access systems defined in 3GPP standards, such as (but not limited to) 6G.

In the present disclosure, a cell refers to a geographical area to which one or more nodes provide a communication service. Accordingly, in the present disclosure, communicating with a specific cell may mean communicating with a gNB or a node which provides a communication service to the specific cell.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Any of the methods described herein may be implemented as computer software or a "computer program". The computer program may be configured to control a network entity (e.g., a server or group of servers) to perform any method according to the disclosure. A network entity (e.g., a server or group of servers) within a cellular network may also be provided, configured to operate in accordance with certain methods disclosed herein. For example, the network entity may include a processor and at least one communication interface, particularly comprising one or both of a transmitter and receiver.

A storage medium and a transmission medium carrying the computer program are also provided. The computer program may comprise one or more instructions, or code, that, when executed by a computer, causes the methods described to be performed. A computer program may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EPROM, EEPROM, Flash memory or a portable/removable memory device), etc. The transmission medium may be a communications signal, a data broadcast, a communications link between two or more computers, etc.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a UE, a network entity, a server or a cell) means "one or more" (for instance one or more UEs, one or more network entities, one or more servers, or one or more cells). Throughout the description and claims of this disclosure, the words "comprise", "including", "having" and "contain" and variations of the words, for example "comprising" and "comprises" or similar, mean "including", and are not intended to (and do not) exclude other components.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

All of the aspects and/or features disclosed in this specification may be combined in any combination, except combinations where at least some of such features and/or steps are mutually exclusive. As described herein, there may be particular combinations of aspects that are of further benefit, such the aspects of determining a set of compensation parameters and applying a set of compensation parameters to measurements. In particular, the preferred features of the invention are applicable to all aspects of the invention and may be used in any combination. Likewise, features described in non-essential combinations may be used separately (not in combination).

A method of manufacturing and/or operating any of the devices disclosed herein is also provided. The method may comprise steps of providing each of the features disclosed and/or configuring or using the respective feature for its stated function.

## Claims

1. A method of initiating application context relocation in a telecommunications network, the method comprising:
receiving a request from a user equipment, UE, for an application client running on the UE to connect to an application server selected from one or more registered application servers;
determining a selected application server from the one or more registered application servers;
determining a service area of the selected application server;
sending a request to monitor a location of the UE;
determining that the UE has left the service area; and
initiating application context relocation in response to determining that the UE has left the service area.

2. The method of claim 1, further comprising:
receiving one or more registration requests from one or more corresponding application servers, wherein each of the one or more registration requests comprises profile information for the corresponding application server; and
for each registration request, authenticating the corresponding application server and, if authentication is successful, registering the corresponding application server by storing the profile information to provide a database of the one or more registered application servers.

3. The method of claim 1 or claim 2, the method further comprising:
determining a current location of the UE;
identifying one or more suitable application servers from the one or more registered application servers, wherein the suitable application servers are identified based on the current location of the UE and a respective service area for each of the registered application servers;
if the one or more suitable application servers consists of exactly one suitable application server, selecting the one suitable application server;
if the one or more suitable application servers comprises a plurality of suitable application servers, sending an indication of the plurality of suitable application servers to the UE and receiving an indication of the selected application server from the UE.

4. The method of any preceding claim, wherein the service area of the selected application server is either:
a geographical area; or
a coverage area defined with reference to one or more cell identifiers.

5. The method of claim 4, wherein the service area of the selected application server is a geographical area, wherein determining the service area of the selected application server comprises:
translating the geographical area to a coverage area defined with reference to one or more cell identifiers.

6. The method of any preceding claim, wherein the request to monitor the location of the UE comprises the service area.

7. The method of claim 6, wherein determining that the UE has left the service area comprises receiving an indication that the UE has left the service area.

8. The method of claim 6 or claim 7, wherein the request to monitor the location of the UE comprises an event monitoring request sent to a network exposure function of a core network of the telecommunications network.

9. The method of any preceding claim, further comprising:
sending a response to the UE to connect the application client to the selected application server.

10. The method of any preceding claim, wherein the selected application server is a source application server, wherein initiating application context relocation comprises:
determining a target application server from the one or more registered application servers; and
sending update messages to the UE, the source application server, and the target application server, to connect the application client to the target application server and disconnect the application client from the source application server.

11. The method of claim 10, further comprising:
determining a service area of the target application server;
sending a request to monitor a location of the UE, the request comprising the service area of the target application server;
determining that the UE has left the service area of the target application server; and
initiating application context relocation in response to determining that the UE has left the service area of the target application server.

12. The method of any preceding claim, further comprising:
sending an indication to the UE that the UE is not required to monitor its own location with respect to the service area.

13. The method of any preceding claim, wherein the following steps are performed by the same network entity:
receiving the request for the application client to connect to an application server;
determining the selected application server;
sending the request to monitor the location of the UE;
determining that the UE has left the service area; and
initiating application context relocation in response to determining that the UE has left the service area.

14. A network entity configured to initiate application context relocation in a telecommunications network, wherein the network entity is configured to perform the following steps:
receiving a request from a user equipment, UE, for an application client running on the UE to connect to an application server selected from one or more registered application servers;
determining a selected application server from the one or more registered application servers;
determining a service area of the selected application server;
sending a request to monitor a location of the UE;
determining that the UE has left the service area; and
initiating application context relocation in response to determining that the UE has left the service area.

15. A computer program comprising instructions that, when executed on a processor, cause the processor to perform the method of any of claims 1 to 13.
